# EUROPÄISCHE PATENTANMELDUNG

(11) **EP 4 443 362 A1**
(43) Veröffentlichungstag der Anmeldung: **09.10.2024**
(21) Anmeldenummer: 23167087.8
(22) Anmeldetag: 06.04.2023
(51) Int. Cl.: G06Q 10/20, G06Q 10/30

(54) **VERFAHREN ZUM BESTIMMEN EINER WIEDERVERWENDBARKEIT EINES ELEKTRONISCHEN BAUTEILS EINES PRODUKTS MITTELS EINER ELEKTRONISCHEN RECHENEINRICHTUNG, COMPUTERPROGRAMMPRODUKT, COMPUTERLESBARES SPEICHERMEDIUM SOWIE ELEKTRONISCHE RECHENEINRICHTUNG**

(71) Anmelder: Siemens Aktiengesellschaft, 80333 München (DE)
(72) Erfinder: Franke, Martin, 14089 Berlin (DE); Müller, Katrin, 10713 Berlin (DE)
(74) Vertreter: Siemens Patent Attorneys

(57) **Zusammenfassung**

Verfahren zum Bestimmen einer Wiederverwendbarkeit eines elektronischen Bauteils eines Produkts mittels einer elektronischen Recheneinrichtung, Computerprogrammprodukt, computerlesbares Speichermedium sowie elektronische Recheneinrichtung

Die Erfindung betrifft ein Verfahren zum Bestimmen einer Wiederverwendbarkeit (12) eines elektronischen Bauteils eines Produkts mittels einer elektronischen Recheneinrichtung (10), mit den Schritten:
- Bereitstellen eines mathematischen Modells (14) für das elektronische Bauteil und/oder für das Produkt mittels der elektronischen Recheneinrichtung (10); (S1)
- Erfassen eines das elektronische Bauteil und/oder das Produkt aktuell charakterisierenden Parameters; (S2)
- Bestimmen eines Nutzungsszenarios des elektronischen Bauteils auf Basis des mathematischen Modells (14) und des erfassten Parameters mittels der elektronischen Recheneinrichtung (10); (S3) und
- Bestimmen der Wiederverwendbarkeit (12) des elektronischen Bauteils in Abhängigkeit von dem Nutzungsszenario mittels der elektronischen Recheneinrichtung (10). (S5)

Ferner betrifft die Erfindung ein Computerprogrammprodukt, ein computerlesbares Speichermedium sowie eine elektronische Recheneinrichtung (10).

## Beschreibung

Die Erfindung betrifft ein Verfahren zum Bestimmen einer Wiederverwendbarkeit eines elektronischen Bauteils eines Produkts mittels einer elektronischen Recheneinrichtung. Ferner betrifft die Erfindung ein Computerprogrammprodukt, ein computerlesbares Speichermedium sowie eine elektronische Recheneinrichtung.

Elektronische und elektrische Geräte werden heute häufig vor Ende der technischen Lebensdauer bzw. aufgrund von Ausfall einzelner Komponenten dem Recycling bzw. der Entsorgung zugeführt. Für ein Recycling-Unternehmen oder auch den Endanwender ist die Wiederverwendbarkeit und Restlebensdauer von noch funktionstüchtigen Komponenten nicht erkennbar. Informationen des Lieferanten und aus der Nutzungsphase liegen nicht vor. Dadurch werden oftmals wertvolle und funktionsfähige Ressourcen, insbesondere Steuerungs- und Elektronikkomponenten entsprechend entsorgt.

Bisher hängt die Wieder-/Weiterverwendungsquote von Expertenwissen im Recycling-Unternehmen ab. Alternative Ansätze ziehen auf die Erfassung von Lebensdauerdaten während der Nutzungsphase ab. Hierfür sind Sensoren und Datenrekorder erforderlich. Diese sind jedoch nur bei hochwertigen Produkten im Einsatz und können häufig nur bei ausgewählten Partnerunternehmen ausgelesen werden. Für sogenannte Low Cost-Elektronik bzw. -Elektronikbaugruppen kommen diese Informationssysteme nicht in Betracht. Darüber hinaus ist eine signifikant höhere Wieder-/Weiterverwendungsquote nur durch ein breites und offenes System von Recycling-Firmen und eine applikationsübergreifende Wieder-/Weiterverwendung möglich. Informationen zu den verwendeten Materialien und Demontageanleitungen werden zwar vom Hersteller heutiger Produkte bereitgestellt, diese helfen jedoch nur beim Material-Recycling und nicht bei der gezielten Wieder-/Weiterverwendung der Komponenten. Die gelebte Praxis in den Recycling-Unternehmen zeigt, dass diese Informationen nicht genutzt werden, da das Erfahrungswissen und die Nutzungsphase entscheidend sind.

Aufgabe der vorliegenden Erfindung ist es, ein Verfahren, ein Computerprogrammprodukt, ein computerlesbares Speichermedium sowie eine elektronische Recheneinrichtung zu schaffen, mittels welchen die Wiederverwendbarkeit von einem elektronischen Bauteil erhöht werden kann.

Diese Aufgabe wird durch ein Verfahren, ein Computerprogrammprodukt, ein computerlesbares Speichermedium sowie eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Wiederverwendbarkeit eines elektronischen Bauteils eines Produkts mittels einer elektronischen Recheneinrichtung. Es erfolgt das Bereitstellen eines mathematischen Modells für das elektronische Bauteil und/oder für das Produkt mittels einer elektronischen Recheneinrichtung. Es erfolgt das Erfassen von zumindest einem das elektronische Bauteil und/oder das Produkt aktuell charakterisierenden Parameter, beispielsweise über eine Erfassungseinrichtung oder durch Eingabe durch einen Nutzer. Es können auch mehr als ein Parameter, insbesondere eine Vielzahl von Parametern, erfasst werden. Ferner wird ein Nutzungsszenario des elektronischen Bauteils auf Basis des Modells und des erfassten Parameters mittels der elektronischen Recheneinrichtung bestimmt und es erfolgt das Bestimmen der Wiederverwendbarkeit des elektronischen Bauteils in Abhängigkeit von dem Nutzungsszenario mittels der elektronischen Recheneinrichtung.

Dadurch ist es ermöglicht, dass die Häufigkeit zur Verwendung eines elektronischen Bauteils entsprechend erhöht werden kann. Insbesondere kann somit bestimmt werden, ob ein elektronisches Bauteil in einem Produkt eventuell wiederverwendet werden kann. Sollte beispielsweise das Produkt defekt sein, aber die entsprechenden elektronischen Bauteile bzw. ein elektronisches Bauteil noch weiterverwendet werden können, so kann dies beispielsweise in einem zukünftigen Produkt verwendet werden.

Das Produkt weist dabei insbesondere zumindest das elektronische Bauteil auf. Das Produkt kann eine Vielzahl von elektronischen Bauteilen oder auch Bauteilgruppen aufweisen, wobei Bauteilgruppen wiederum aus einer Vielzahl von elektronischen Bauteilen ausgebildet sein können. Unter Vielzahl ist insbesondere mehr als eins zu verstehen.

Insbesondere bietet somit die Erfindung den Vorteil, dass Lösungen im Stand der Technik keine Möglichkeit der Wiederverwendbarkeit und der Restlebensdauer von elektronischen Komponenten ohne Angaben des Herstellers und Kenntnis der Nutzungsphase bestimmt werden können. Entscheidungen werden gemäß Stand der Technik alleine aufgrund von subjektiven Erfahrungswerten getroffen, wodurch das Nutzungspotenzial von Gebrauchtteilen nicht ausgeschöpft und wertvolle Ressourcen und investierte Fertigungsaufwände verschwendet werden.

Insbesondere ist somit ein Tool bzw. eine elektronische Recheneinrichtung zur Förderung der Wiederverwendbarkeit und Abschätzung der Restlebensdauer von elektronischen Komponenten vorgeschlagen. Aus dem bestimmten Nutzungsszenario wird wiederum die Wahrscheinlichkeit der Restlebensdauer bestimmt. Die möglichen Applikationen für eine weitere Nutzung dieser Komponenten bzw. elektronischen Bauteile und der Aufwand liefern dabei das Vermarktungspotenzial.

Gemäß einer vorteilhaften Ausgestaltungsform wird beim Nutzungsszenario eine durchschnittliche Betriebsdauer und/oder Ladezyklen und/oder ein Außeneinsatz und/oder eine Umgebungstemperatur und/oder eine Umgebungsfeuchte des elektronischen Bauteils und/oder des Produkts berücksichtigt. Beispielsweise kann hierbei somit bauteilspezifisch oder auch produktspezifisch auf die Restlebensdauer eingegangen werden. Beispielsweise kann erfasst werden, ob sich das elektronische Bauteil oder das Produkt im Außeneinsatz, insbesondere in der Umgebung, befunden hat. Eine entsprechende Bewertung kann dann auf Basis der genannten Faktoren bestimmt werden. Insbesondere kann somit auf Basis des Nutzungsszenarios ein anzunehmendes Lastprofil im Einsatz des Produktes entsprechend bestimmt werden. Somit kann produktspezifisch bzw. bauteilspezifisch das Nutzungsszenario bestimmt werden, wodurch auf eine individuelle Restnutzbarkeit bzw. Wiederverwendbarkeit geschlossen werden kann.

Eine weitere vorteilhafte Ausgestaltungsform sieht vor, dass beim mathematischen Modell eine Datenbasis über das elektronische Bauteil und/oder ein Regelwerk über Nutzungsprofile und/oder einen Einfluss auf eine Zuverlässigkeit der Bauelemente auf das Produkt berücksichtigt werden. Somit ist es ermöglicht, dass eine zuverlässige Abschätzung der Restlebensdauer bzw. Wiederverwendbarkeit durchgeführt werden kann. Insbesondere kann die Datenbasis beispielsweise auf historischen Daten basieren und durch Informationen des Herstellers entsprechend aufgebaut sein. Ferner können auch entsprechende Erfahrungswerte durch einen Nutzer mit eingegeben werden, sodass die Datenbasis auch weitergebildet werden kann, um zukünftig somit detaillierter die Wiederverwendbarkeit bestimmt zu können.

Ferner hat es sich als vorteilhaft erwiesen, wenn mittels einer optischen Erfassungseinrichtung der Parameter erfasst wird und/oder mittels einer Eingabeeinrichtung eine Eingabe einer Person über einen Zustand des Bauteils und/oder des Produkts als Parameter erfasst wird. Beispielsweise kann die optische Erfassungseinrichtung als Kamera ausgebildet sein. Die Eingabeeinrichtung kann beispielsweise in Form einer Tastatur bereitgestellt werden und somit Informationen von einem Nutzer bzw. einer Person erfasst werden. Beispielsweise kann eine fragengestützte Zustandserfassung durch beispielsweise eine Sichtprüfung zur Erfassung des Einsatzzwecks des Produktes bzw. des elektronischen Bauteils und des Alters des Produktes erfasst werden. Beispielsweise können entsprechende maximale Einsatzdauern durch einen Nutzer entsprechend eingegeben werden. Somit ist es ermöglicht, dass auf unterschiedliche Arten und Weisen die Datenerfassung zur Auswertung durchgeführt werden kann.

Eine weitere vorteilhafte Ausgestaltungsform sieht vor, dass in Abhängigkeit von der bestimmten Wiederverwendbarkeit zukünftige Einsatzmöglichkeiten für das elektronische Bauteil bestimmt werden und/oder einem Nutzer auf einer Ausgabeeinrichtung vorgeschlagen werden. Ferner kann dabei vorgesehen sein, dass ein zukünftiger Einsatzzweck und/oder eine zukünftige Einsatzdauer des elektronischen Bauteils in einem neuen Produkt berücksichtigt werden. Unter neues Produkt ist insbesondere das Produkt zu verstehen, in welchem das bereits gebrauchte elektronische Bauteil eventuell eingesetzt werden kann. Insbesondere ist es somit ermöglicht, dass beispielsweise eine Auswertung des elektronischen Bauteils dahingehend durchgeführt werden kann, ob das elektronische Bauteil in einem zukünftigen Produkt eingebaut werden kann. Sollte beispielsweise die Restlebensdauer des elektronischen Bauteils auf zwei Jahre geschätzt werden und ein Produkt erzeugt werden, dessen Restlebensdauer lediglich ein Jahr beträgt, so ist es beispielsweise möglich, dass das elektronische Bauteil in diesem Produkt verwendet werden kann. Insbesondere können somit unterschiedliche Parameter für die neuen Produkte auch in das mathematische Modell mit eingegeben werden, und eine Ausgabe für einen Nutzer erfolgen, ob das elektronische Bauteil in dem Produkt verwendet werden kann bzw. eine Liste an potenziellen Produkten dem Nutzer vorgeschlagen - werden, in welchen das elektronische Bauteil wiederverwendet werden kann. Somit ist es ermöglicht, dass eine zuverlässige Wiederverwendbarkeit des elektronischen Bauteils in einem neuen Produkt realisiert werden kann.

Ebenfalls vorteilhaft ist, wenn ein Demontageaufwand des elektronischen Bauteils von dem Produkt bei der Bestimmung der Wiederverwendbarkeit berücksichtigt wird. Es kann ferner auch ein Montageaufwand des elektronischen Bauteils an einem neuen Produkt bei der Bestimmung der Wiederverwendbarkeit berücksichtigt werden. Sollte beispielsweise eine komplexe Demontage des Produkts erfolgen müssen, um das elektronische Bauteil aus dem Produkt zu entfernen, so kann beispielsweise dies mit berücksichtigt werden, und beispielsweise der Schluss gezogen werden, dass sich eine Demontage nicht lohnt, da der Aufwand zu groß wäre, anstatt das elektronische Bauteil zu ersetzen. Ferner kann auch ein Montageaufwand mit berücksichtigt werden. Sollten beispielsweise ähnliche elektronische Bauteile einen geringeren Montageaufwand aufweisen, so können diese mit berücksichtigt werden bzw. gegengerechnet werden, ob sich die Wiederverwendung des elektronischen Bauteils sowohl technisch als auch finanziell und aufwandsbezogen lohnt. Ferner wird insbesondere beim Demontageaufwand bzw. Montageaufwand eine Demontagezeit bzw. Montagezeit berücksichtigt und beispielsweise eine Auswertung, ob der Aufwand sich lohnt bezüglich der Demontage bzw. Montagezeit ausgeführt.

Weiterhin vorteilhaft ist, wenn die Wiederverwendbarkeit auf Basis einer potenziellen Restlebensdauer des elektronischen Bauteils bestimmt wird. Insbesondere kann beispielsweise bestimmt werden, wie lange bzw. wie viele Zyklen das elektronische Bauteil noch aushalten kann. Insbesondere beschreibt dies die Restlebensdauer des elektronischen Bauteils. Auf Basis der Restlebensdauer kann wiederum bestimmt werden, ob eine Wiederverwendbarkeit in einem spezifischen Produkt sinnvoll ist, oder sich beispielsweise die Entsorgung des elektronischen Bauteils lohnt.

Gemäß einer weiteren vorteilhaften Ausgestaltungsform wird die bestimmte Wiederverwendbarkeit mittels des mathematischen Modells bei einer zukünftigen Bestimmung einer Wiederverwendbarkeit eines Bauteils berücksichtigt. Insbesondere kann somit eine Dokumentation der erfolgten Wieder- bzw. Weiterverwendung durchgeführt werden. Dies kann wiederum im mathematischen Modell zukünftig berücksichtigt werden, wodurch die elektronische Recheneinrichtung lernt und somit zukünftig eine detailliertere bzw. verbesserte Bestimmung der Wiederverwendbarkeit durchführen kann. Insbesondere die Dokumentation der erfolgten Wieder- bzw. Weiterverwendung gibt Auskunft über die Güte der berechneten Restlebensdauer in den ausgewählten Applikationen und kann somit entsprechend berücksichtigt werden.

Weiterhin vorteilhaft ist, wenn die elektronische Recheneinrichtung als künstliche Intelligenz bereitgestellt wird.. Insbesondere ist die elektronische Recheneinrichtung dazu ausgebildet, anhand der Dokumentation bzw. Daten zu lernen und das mathematische Modell entsprechend anzupassen. Insbesondere erfolgt die Anpassung automatisch. Somit kann eine Anpassung über die Zeit hinweg realisiert werden, wodurch auf lange Sicht gesehen das mathematische Modell zuverlässiger und detaillierter wird, wodurch die Wiederverwendbarkeit verbessert bestimmt werden kann.

Ferner hat es sich als vorteilhaft erwiesen, wenn das elektronische Bauteil bezüglich eines Zustands einer Platine des elektronischen Bauteils bewertet wird. Insbesondere kann dabei das elektronische Bauteil beispielsweise von außen und nach der Öffnung bewertet werden und hierbei insbesondere der Fokus auf die entsprechende Elektronik und Leiterplatte gesetzt werden, da insbesondere diese das elektronische Bauteil bzw. deren Lebensdauer beeinflussen. Ferner ist insbesondere auf der Leiterplatte bzw. der Platine zuverlässig das Alter ersichtlich, da dort oftmals die ersten Ermüdungserscheinungen des elektronischen Bauteils auftreten. Insbesondere werden beispielsweise Lötpunkte sowie die Positionierung der entsprechenden Bauteile auf der Platine überprüft und können Aufschluss darauf geben, wie der Zustand des elektronischen Bauteils ist, so dass dadurch eine zuverlässigere Bestimmung der Wiederverwendbarkeit durchgeführt werden kann. Es sind jedoch auch weitere Prüfverfahren möglich beispielsweise eine Überprüfung der Signalübertragung und/oder eine Funktionsüberprüfung unter Stoß- und/oder Temperaturschwankungen.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung zu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft ein computerlesbares Speichermedium mit einem Computerprogrammprodukt nach dem vorhergehenden Aspekt.

Ferner betrifft die Erfindung auch eine elektronische Recheneinrichtung zum Bestimmen einer Wiederverwendbarkeit eines elektronischen Bauteils eines Produkts, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Die elektronische Recheneinrichtung weist beispielsweise Prozessoren, Schaltkreise, insbesondere integrierte Schaltkreise, sowie weitere elektronische Bauteile auf, um entsprechende Verfahrensschritte durchführen zu können. Unter einer Recheneinheit kann insbesondere ein Datenverarbeitungsgerät verstanden werden, das einen Verarbeitungsschaltkreis enthält. Die Recheneinheit/elektronische Recheneinrichtung kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit/elektronische Recheneinrichtung kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Vorteilhafte Ausgestaltungsform des Verfahrens sind als vorteilhafte Ausgestaltungsformen des Computerprogrammprodukts, des computerlesbaren Speichermediums sowie der elektronischen Recheneinrichtung anzusehen. Die elektronische Recheneinrichtung weist hierzu insbesondere Bauteile auf, um entsprechende Verfahrensschritte durchführen zu können.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

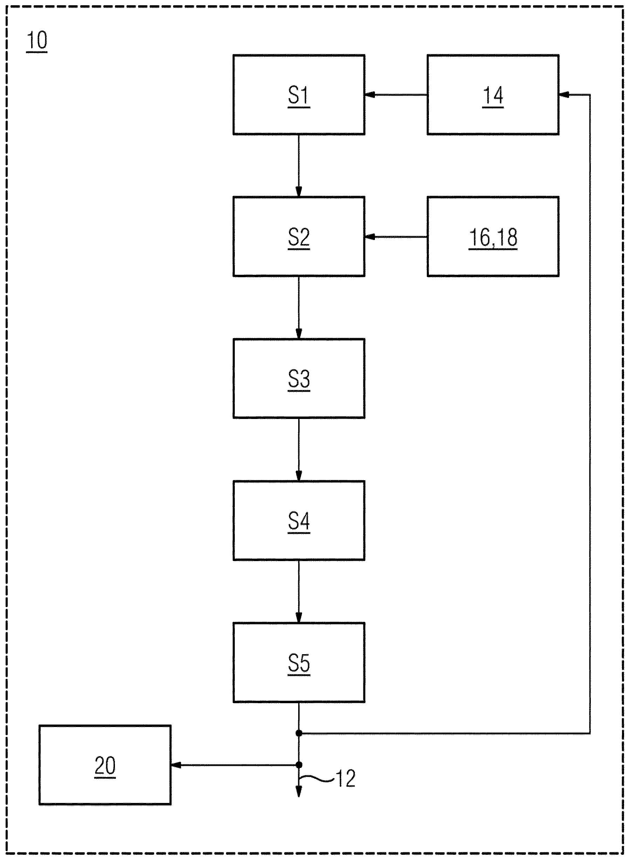

Die Erfindung wird nun anhand der Zeichnung näher erläutert. Dabei zeigt die einzige Fig. 1 ein schematisches Ablaufdiagramm gemäß einer Ausführungsform des Verfahrens, wobei das Verfahren in einer entsprechenden elektronischen Recheneinrichtung implementiert ist.

FIG. 1 zeigt ein schematisches Ablaufdiagramm gemäß einer Ausführungsform des Verfahrens, wobei das Verfahren in einer elektronischen Recheneinrichtung 10 implementiert ist. Die elektronische Recheneinrichtung 10 ist zum Bestimmen einer Wiederverwendbarkeit 12 eines elektronischen Bauteils eines Produkts ausgebildet.

In einem ersten Schritt S1 erfolgt die Bereitstellung eines mathematischen Modells 14 für das elektronische Bauteil und/oder für das Produkt mittels der elektronischen Recheneinrichtung 10. Das mathematische Modell 14 kann insbesondere in Form einer künstlichen Intelligenz bereitgestellt werden. In einem zweiten Schritt S2 erfolgt das Erfassen eines das elektronische Bauteil und/oder das Produkt aktuell charakterisierenden Parameters. Hierzu kann beispielsweise eine Erfassungseinrichtung 16 oder eine Eingabeeinrichtung 18 bereitgestellt werden. Die Erfassungseinrichtung 16 kann beispielsweise in Form einer optischen Erfassung z.B. Kamera oder weiterer Erfassungseinrichtungen/Sensoren bereitgestellt werden, die Eingabeeinrichtung beispielsweise in Form einer Tastatur oder eines weiteren Eingabemittels.

In einem dritten Schritt S3 erfolgt das Bestimmen eines Nutzungsszenarios des elektronischen Bauteils auf Basis des mathematischen Modells 14 und des erfassten Parameters mittels der elektronischen Recheneinrichtung 10. In einem optionalen vierten Schritt S4 wird die Restlebensdauer auf Basis des Nutzungsszenarios bestimmt. Es erfolgt das Bestimmen der Wiederverwendbarkeit 12 in einem fünften Schritt S5 in Abhängigkeit von dem Nutzungsszenario mittels der elektronischen Recheneinrichtung 10.

Insbesondere kann dabei vorgesehen sein, dass beim Nutzungsszenario eine durchschnittliche Betriebsdauer und/oder Ladezyklen und/oder ein Außeneinsatz und/oder Umgebungstemperatur und/oder eine Umgebungsfeuchte des elektronischen Bauteils und/oder des Produkts berücksichtigt wird.

Des Weiteren kann vorgesehen sein, dass beim mathematischen Modell 14 eine Datenbasis über das elektronische Bauteil und/oder ein Regelwerk über Nutzungsprofile und/oder einen Einfluss auf Zuverlässigkeit der Bauelemente auf das Produkt berücksichtigt werden.

Wie bereits erwähnt, kann mittels einer optischen Erfassungseinrichtung 16 der Parameter erfasst werden, insbesondere automatisiert erfasst werden, oder mittels einer Eingabeeinrichtung 18 eine Eingabe einer Person über einen Zustand des elektronischen Bauteils und/oder des Produkts als Parameter erfasst werden. Des Weiteren ist insbesondere vorgesehen, dass in Abhängigkeit von der bestimmten Wiederverwendbarkeit 12 zukünftige Einsatzmöglichkeiten für das elektronische Bauteil bestimmt werden und/oder Nutzer auf eine Ausgabeeinrichtung 20, beispielsweise auf einem Display der elektronischen Recheneinrichtung 10, vorgeschlagen bzw. ausgegeben werden. Dabei kann ein zukünftiger Einsatzzweck und/oder eine zukünftige Einsatzdauer des elektronischen Bauteils in einem neuen Produkt berücksichtigt werden.

Des Weiteren kann vorgesehen sein, dass die bestimmte Wiederverwendbarkeit 12 mittels des mathematischen Modells 14 bei einer zukünftigen Bestimmung einer Wiederverwendbarkeit 12 eines Bauteils berücksichtigt wird. Insbesondere wird dies als Rückkopplung für eine verbesserte Vorhersage (Lernen) verwendet. Hierzu können zusätzlich die Ergebnisse der tatsächlichen Wiederverwendung eingespeist werden.

Insbesondere zeigt somit die FIG. 1 ein Mittel zur Förderung der Wiederverwendbarkeit 12 und Abschätzung der Restlebensdauer von elektronischen Bauteilen. Es wird eine Datenbasis über elektronische Bauteile und das Regelwerk über Nutzungsprofile und Einfluss auf die Zuverlässigkeit der Bauelemente bereitgestellt. Ferner wird eine fragengestützte Zustandserfassung durch Sichtprüfung zur Erfassung des Einsatzzweckes des Produktes und des Alters des Produktes bereitgestellt werden, beispielsweise über die Eingabeeinrichtung 18. Es erfolgt eine Dokumentation des Zustands über beispielsweise Bilddaten, beispielsweise von außen und nach der Öffnung, wobei hierbei insbesondere der Fokus auf die Elektronik bzw. Platine oder Leiterplatten liegt. Es erfolgt dann auch eine Dokumentation der erfolgten Wieder- bzw. Weiterverwendung.

Es wird ein Nutzungsszenario und ein anzunehmendes Lastprofil im Einsatz des Produkts, z. B. durchschnittliche Betriebsdauer, Ladezyklen, Outdoor-Betrieb bei Umgebungstemperatur und Feuchte, bestimmt. Es wird eine Übersicht der verwendeten elektronischen Komponenten aus der Bilderkennung durchgeführt und abgeleitete Funktionen der elektronischen Komponente und theoretisch möglicher Applikationen für die Wieder- bzw. Weiterverwendung dieser Komponenten bestimmt. Auch der Aufwand für die Demontage und die Aufbereitung dieser Komponenten für eine Wieder- bzw. Weiterverwendung wird ebenfalls bestimmt.

Aus dem angenommenen Nutzungsszenario wird die Wahrscheinlichkeit der Restlebensdauer bestimmt. Die möglichen Applikationen für eine weitere Nutzung dieser Komponenten und der Aufwand liefern wiederum ein entsprechendes Wiederverwendbarkeitspotenzial. Die Dokumentation der erfolgten Wieder- bzw. Weiterverwendung gibt Auskunft über die Güte der berechneten Restlebensdauer in den ausgewählten Applikationen.

Auf Basis der Dokumentation des Zustands und der Dokumentation der erfolgten Wieder- bzw. Weiterverwendung kann das mathematische Modell 14, insbesondere die künstliche Intelligenz, auf Datenbasis wiederum erweitert werden, insbesondere ergänzt auch durch die fragengestützte Zustandserfassung. Zukünftig kann wiederum die fragengestützte Zustandserfassung auf Basis der Dokumentation ersetzt werden, sodass durch die Bilderkennung automatisch Zweck, Zustand des elektronischen Bauteils erfasst werden können.

### Bezugszeichenliste

- 10: Elektronische Recheneinrichtung
- 12: Wiederverwendbarkeit
- 14: Mathematisches Modell
- 16: Erfassungseinrichtung
- 18: Eingabeeinrichtung
- 20: Ausgabeeinrichtung
- S1-S5: Schritte des Verfahrens

## Patentansprüche

1. Verfahren zum Bestimmen einer Wiederverwendbarkeit (12) eines elektronischen Bauteils eines Produkts mittels einer elektronischen Recheneinrichtung (10), mit den Schritten:
- Bereitstellen eines mathematischen Modells (14) für das elektronische Bauteil und/oder für das Produkt mittels der elektronischen Recheneinrichtung (10); (S1)
- Erfassen von zumindest einem das elektronische Bauteil und/oder das Produkt aktuell charakterisierenden Parameters; (S2)
- Bestimmen eines Nutzungsszenarios des elektronischen Bauteils auf Basis des mathematischen Modells (14) und des erfassten Parameters mittels der elektronischen Recheneinrichtung (10); (S3) und
- Bestimmen der Wiederverwendbarkeit (12) des elektronischen Bauteils in Abhängigkeit von dem Nutzungsszenario mittels der elektronischen Recheneinrichtung (10). (S5)

2. Verfahren nach Anspruch 1, **dadurch gekennzeichnet, dass** beim Nutzungsszenario eine durchschnittliche Betriebsdauer und/oder Ladezyklen und/oder ein Außeneinsatz und/oder eine Umgebungstemperatur und/oder eine Umgebungsfeuchte des elektronischen Bauteils und/oder des Produkts berücksichtigt werden.

3. Verfahren nach Anspruch 1 oder 2, **dadurch gekennzeichnet, dass** beim mathematischen Modell (14) eine Datenbasis über das elektronische Bauteil und/oder ein Regelwerk über Nutzungsprofile und/oder ein Einfluss auf Zuverlässigkeit des elektronischen Bauteils auf das Produkt berücksichtigt werden.

4. Verfahren nach einem der vorhergehenden Ansprüche, **dadurch gekennzeichnet, dass** mittels einer optischen Erfassungseinrichtung (16) der Parameter erfasst wird und/oder mittels einer Eingabeeinrichtung (18) eine Eingabe einer Person über einen Zustand des elektronischen Bauteils und/oder des Produkts als Parameter erfasst wird.

5. Verfahren nach einem der vorhergehenden Ansprüche, **dadurch gekennzeichnet, dass** in Abhängigkeit von der bestimmten Wiederverwendbarkeit (12) zukünftige Einsatzmöglichkeiten für das elektronische Bauteil bestimmt werden und/oder einem Nutzer auf einer Ausgabeeinrichtung (20) vorgeschlagen werden.

6. Verfahren nach Anspruch 5, **dadurch gekennzeichnet, dass** ein zukünftiger Einsatzzweck und/oder eine zukünftige Einsatzdauer des elektronischen Bauteils in einem neuen Produkt berücksichtigt werden.

7. Verfahren nach einem der vorhergehenden Ansprüche, **dadurch gekennzeichnet, dass** ein Demontageaufwand des elektronischen Bauteils von dem Produkt bei der Bestimmung der Wiederverwendbarkeit (12) berücksichtigt wird.

8. Verfahren nach einem der vorhergehenden Ansprüche, **dadurch gekennzeichnet, dass** ein Montageaufwand des elektronischen Bauteils an einem neuen Produkt bei der Bestimmung der Wiederverwendbarkeit (12) berücksichtigt wird.

9. Verfahren nach einem der vorhergehenden Ansprüche, **dadurch gekennzeichnet, dass** die Wiederverwendbarkeit (12) auf Basis einer potentiellen Restlebensdauer des elektronischen Bauteils bestimmt wird.

10. Verfahren nach einem der vorhergehenden Ansprüche, **dadurch gekennzeichnet, dass** die bestimmte Wiederverwendbarkeit (12) mittels des mathematischen Modells (14) bei einer zukünftigen Bestimmung einer Wiederverwendbarkeit (12) eines Bauteils berücksichtigt wird.

11. Verfahren nach einem der vorhergehenden Ansprüche, **dadurch gekennzeichnet, dass** die elektronische Recheneinrichtung (10) als künstliche Intelligenz bereitgestellt wird.

12. Verfahren nach einem der vorhergehenden Ansprüche, **dadurch gekennzeichnet, dass** das elektronische Bauteil bezüglich eines Zustands einer Platine des elektronischen Bauteils bewertet wird.

13. Computerprogrammprodukt mit Programmcodemitteln, welche eine elektronische Recheneinrichtung (10) dazu veranlassen, wenn die Programmcodemittel von der elektronischen Recheneinrichtung (10) abgearbeitet werden, ein Verfahren nach einem der Ansprüche 1 bis 12 durchzuführen.

14. Computerlesbares Speichermedium mit einem Computerprogrammprodukt nach Anspruch 13.

15. Elektronische Recheneinrichtung (10) zum Bestimmen einer Wiederverwendbarkeit (12) eines elektronischen Bauteils eines Produkts, wobei die elektronische Recheneinrichtung (10) zum Durchführen eines Verfahrens nach einem der Ansprüche 1 bis 12 ausgebildet ist.
